# EUROPEAN PATENT APPLICATION

(11) **EP 1 389 818 A1**
(43) Date of publication of application: **18.02.2004**
(21) Application number: 03255066.7
(22) Date of filing: 14.08.2003
(51) Int. Cl.: H02J 1/08

(54) **Electrical power supply for a rail vehicle**

(30) Priority: 16.08.2002 DE 10237683
(71) Applicant: Bombardier Transportation (Technology) GmbH, 13627 Berlin (DE)
(72) Inventor: Rudolf, Michael, 10711 Berlin (DE)
(74) Representative: Akers, Noel James

(57) **Abstract**

The invention relates to a vehicle electrical power supply for a rail vehicle. The object of the invention is to provide a vehicle electrical power supply which, while retaining the advantages arising from the use of direct current busbars, takes account of the different power requirements of the many consumers operated in a rail vehicle. The object is achieved by a vehicle electrical power supply with a direct current busbar which, unlike direct current busbars known from the prior art, has three conductors like three-phase current busbars. The busbar is embodied by a first conductor bearing a positive potential, a second conductor bearing a negative potential and a third middle conductor.

## Description

The invention relates to a vehicle electrical power supply for a rail vehicle, in particular the configuration of a busbar and the power sources supplying said busbar.

### (Prior art)

While the vehicle electrical power supply for rail vehicles has often in the past been provided and today still is provided to some extent by means of three-phase current busbars with three conductors, modern rail vehicles generally have vehicle electrical power supplies which make use of a direct current busbar (DC busbar) with two conductors. This applies equally to rail vehicles for long distance and regional services and to those for local public transport services. In comparison with a vehicle power supply by means of three-phase current busbars, using direct current busbars is associated with a series of advantages. It is, for example, simpler to ensure vehicle electrical power supply standardisation across projects and vehicles with 2-conductor direct current systems. This in particular also relates to standardisation between tractive vehicles and carriages. Moreover, design of the vehicle electrical system is largely independent of the type of traction of the tractive vehicle, i.e. is independent of whether the vehicle is diesel-mechanically, diesel-hydraulically, diesel-electrically or electrically operated. This standardisation of vehicle electrical power supply provides the immediate advantage that standard components and identical interfaces are used irrespective of the vehicle type or system. These components may accordingly be produced in larger numbers, so resulting in lower costs in particular due to reduced engineering complexity. Another advantage can be considered to be simplification of vehicle wiring, in that, with approximately the same current and consequently the same cable cross-section, the direct current busbar can transmit virtually the same power with its two lines as the three-phase current busbar with its three lines. Another substantial advantage of using direct current busbars resides in the vehicle's improved EMC behaviour, it being possible to dispense with heavy and costly sinus and EMC filters. Interfaces with subsystems are also simpler to design. Direct current busbars with two conductors preferably operating at 670 V are accordingly widely used in long distance rail vehicles. Major consumers with a high power rating are preferably supplied with this voltage. However, this is also a disadvantage of the direct current busbars with two conductors which are used. Since rail vehicles also have many consumers with a comparatively low power rating (e.g. heating for the tractive vehicle's windscreen or pipe heaters for the toilet system), there is a discrepancy between the power required for these consumers (of the order of a few watts) and commercially available protective equipment and switchgear capable of handling power in the kilowatt range.

### (Object of the invention)

The object of the invention is to avoid the above-stated disadvantages. In particular, the object is to provide a vehicle electrical power supply which, while retaining the advantages arising from the use of direct current busbars, takes account of the different power requirements of the many consumers operated in a rail vehicle. Said object is achieved by a vehicle electrical power supply according to the features of the main claim. Advantageous developments of the invention are stated in the subordinate claims. The vehicle electrical power supply proposed according to the invention is also based on a direct current busbar. However, unlike direct current busbars known from the prior art, this busbar has three conductors like three-phase current busbars. The busbar is embodied by a first conductor bearing a positive potential, a second conductor bearing a negative potential and a third middle conductor. The middle conductor bears a potential which is between the potential of the first and of the second conductor. Consumers and/or converters in the rail vehicle are accordingly supplied with voltage by being connected to the first and second conductors or by being connected to the middle conductor and one of the other two conductors. According to one possible development of the invention, with regard to the potential it bears, the middle conductor of the direct current busbar constitutes a "floating" ground in the circuit. Preferably, however, the current busbar is symmetrical with regard to the ratio of potentials. In this case, the same potential difference prevails between the first, positive potential conductor and the middle conductor and between the second, negative potential conductor and the middle conductor. In order ensure this, the middle conductor of the direct current busbar should advantageously be connected to the circuit ground of a power source supplying the busbar. Depending upon the power source supplying the busbar for the vehicle electrical power supply, the middle conductor thereof is produced by a network which is, for example, a circuit component of a generator or converter. It is, however, also conceivable to produce it by a downstream unit, for example by a network downstream from the circuit unit for generating direct current in a generator, by means of which the voltage between the first, positive potential conductor and the second, negative potential conductor is halved. One option here is to connect together the first, positive potential conductor and the second, negative potential conductor by two series-connected capacitors and to bring out the middle conductor between these two capacitors. In this manner, the first and second conductors remain decoupled from one another with regard to direct current. The invention makes it possible fundamentally to retain the concept of a preferably 670 V direct current supply and the consequent advantages which have been mentioned above. By slight modifications to the circuitry of the power sources, it is possible to produce a middle conductor merely by means of a simple network and thus to produce another voltage value or optionally also two further voltage values (in the event of asymmetrical voltage division), as a result of which it is possible to take better account of the differing power requirements of the consumers. Larger, high power consumers are accordingly still supplied with an input voltage of preferably 670 V drawn between the first and the second conductors, while, in the preferred case of symmetrical division of said voltage, lower power consumers or small consumers can preferably be supplied with 335 V. To this end, the latter are connected to the middle conductor and to the conductor bearing the positive or the negative potential. All that need be ensured is that the two conductors bearing positive and negative potential are approximately equally loaded, but this may straightforwardly be achieved during system design. Advantages, such as the improved EMC behaviour in comparison with vehicle electrical systems operating with three-phase current, as a consequence of which it is possible to dispense with heavy and costly sinus and EMC filters, are also retained, as is the standardisation of power supply relative to tractive vehicles and carriages and independence from type of traction. Hitherto used components (consumers as well as protective equipment and switchgear) can continue to be used and be arranged in distributed manner in the rail vehicle using simple interfaces, so likewise retaining the advantage of better space utilisation and weight distribution in comparison with three-phase current systems. The additional cost of wiring, relative to 2-conductor systems, due to the additional middle conductor is counterbalanced by a series of further advantages. It may firstly be noted that the number of standard appliances available for use in the vehicles is increased by the different supply voltages which are available. As a result, for example, some consumers with a low power rating, such as heaters for frost protection purposes or for the vehicle windscreen, can be at least in part be directly operated preferably at 335 V without there being any necessity to provide a separate three-phase network to supply these components. Components which are suitable for connection to 400 V may also optionally be used. However, for protective equipment and switchgear too, there is a larger selection of appliances preferably operating at 670 V than for 2-conductor systems. At preferably DC 335 V, standard three-phase appliances exhibit a higher, still acceptable switching capacity than at preferably 670 V, so creating a further advantage. An alternating voltage of 230 V at 50 Hz for socket outlets can be produced directly from the intermediate circuit voltage of preferably 335 V by single-phase inverters.

### (Examples)

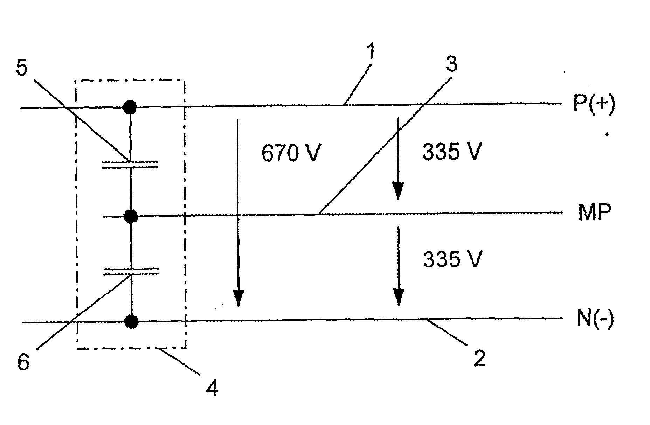

The following exemplary embodiment is intended to illustrate the invention in greater detail. The accompanying drawing shows a simple example of a network 4 for production of the middle conductor 3 in a DC system operating at 670 V. The middle conductor 3 is produced by connecting the first conductor 1 bearing a positive potential, and the second conductor 2 bearing a negative potential via two series-connected capacitors 5, 6 (obviously with appropriate dielectric strength). Conductor 1 and conductor 2 remain decoupled from one another with regard to the direct current, 670 V on the Example, which can be drawn off from between them. The middle conductor 3 is brought out between the capacitors 5, 6. As shown in the Figure, the direct current voltage of 670 V is symmetrically divided by the network 4 with the middle conductor 3, which is preferably at the circuit ground of a power source, such as a generator or converter. A direct current voltage of 335 V is available between the middle conductor 3 and in each case one of the conductors 1 or 2. This voltage is available to supply consumers with a relatively low power rating, while, as previously, a direct current voltage of 670 V can be drawn between the conductors 1 and 2 for large consumers or switchgear. There are various options for configuring the network 4 for producing a middle conductor 3, the options varying as a function of the particular form of the power source (e.g. generator or converter). The network 4 shown accordingly only constitutes one fundamental, simple possibility.

### (List of reference numerals)

- 1: Conductor with positive potential P (+)
- 2: Conductor with negative potential N (-)
- 3: Middle conductor MP
- 4: Network
- 5; 6: Capacitor

## Claims

1. A vehicle electrical power supply for a rail vehicle with a busbar which takes the form of a direct current busbar and comprises three conductors (1, 2, 3), a first conductor (1) bearing positive potential, a second conductor (2) bearing negative potential and a third middle conductor (3) with a potential which is between the potential of the first conductor (1) and the potential of the second conductor (2), wherein the consumers and/or converters in the rail vehicle are supplied with voltage by being connected to the first and second conductors (1, 2) or by being connected to the middle conductor (3) and one of the other two conductors (1, 2).

2. A vehicle electrical power supply according to claim 1, **characterised in that** the same potential difference prevails between the first, positive potential conductor (1) and the middle conductor (3) of the direct current busbar and between the second, negative potential conductor (2) and the middle conductor 3).

3. A vehicle electrical power supply according to claim 1, **characterised in that**, with regard to the potential it bears, the middle conductor (3) of the direct current busbar constitutes a floating ground in the circuit.

4. A vehicle electrical power supply according to claim 1 or 2, **characterised in that**, with regard to the potential it bears, the middle conductor (3) of the direct current busbar is at the circuit ground of a power source supplying the busbar.

5. A vehicle electrical power supply according to claim 1 or 2, **characterised in that** the middle conductor (3) of the direct current busbar is produced by a network (4) which is a circuit component of a generator or converter.

6. A vehicle electrical power supply according to claim 1 or 2, **characterised in that** the middle conductor (3) of the direct current busbar is formed by a network (4) downstream from the circuit unit for generating direct current in a generator or converter, the voltage between the first, positive potential conductor (1) and the second, negative potential conductor (2) being halved by the network (4).

7. A vehicle electrical power supply according to claim 6, **characterised in that** the network (4) comprises two series-connected capacitors (5, 6) which connect together the first, positive potential conductor (1) and the second, negative potential conductor (2) and between which the middle conductor (3) is brought out, the first and second conductors (1, 2) being decoupled with regard to direct current.
